# EUROPÄISCHE PATENTSCHRIFT

(11) **EP 2 417 679 B1**
(45) Veröffentlichungstag und Bekanntmachung des Hinweises auf die Patenterteilung: **05.08.2015**
(21) Anmeldenummer: 10716784.3
(22) Anmeldetag: 07.04.2010
(51) Int. Cl.: H02G 3/04

(54) **LADESÄULENSOCKEL FÜR ELEKTRISCHE LADESÄULEN**
CHARGING STATION BASE FOR ELECTRICAL CHARGING STATIONS
SOCLE DE COLONNE DE RECHARGEMENT POUR DES COLONNES DE RECHARGEMENT ÉLECTRIQUE

(30) Priorität: 08.04.2009 DE 102009016503; 24.07.2009 DE 202009010127 U
(43) Veröffentlichungstag der Anmeldung: 15.02.2012
(73) Patentinhaber: RWE AG, 45128 Essen (DE)
(72) Erfinder: MEIER, Jörg, 54294 Trier (DE); SABEL, Tobias, 57258 Freudenberg (DE)
(74) Vertreter: Cohausz & Florack
(86) Internationale Anmeldenummer: PCT/EP2010/054598
(87) Internationale Veröffentlichungsnummer: WO 2010/115929

(56) Entgegenhaltungen:
- WO-A1-2005/017290
- GB-A- 784 749
- GB-A- 2 403 252
- US-A- 1 386 947
- US-A- 1 962 915
- US-A- 2 236 775
- US-A- 4 070 837
- US-A- 4 200 906
- US-A- 4 422 269
- US-A- 4 716 508
- US-B1- 6 857 808

## Beschreibung

Der Gegenstand betrifft einen Ladesäulensockel für eine elektrische Ladesäule mit einem Fuß und einem aus dem Fuß herausragenden Stumpf.

Die Verbreitung von elektrisch betriebenen Fahrzeugen wird in naher Zukunft rapide zunehmen. Mit der Verbreitung von Elektrofahrzeugen, die mit einem Elektromotor betrieben werden, muss eine funktionierende Infrastruktur zum Laden der Elektrofahrzeuge zur Verfügung gestellt werden. Neben dem Laden an der Haussteckdose muss den Benutzern von Elektrofahrzeugen die Möglichkeit eingeräumt werden, auch im öffentlichen Bereich Energie zu beziehen. Bei den bisher verfügbaren Reichweiten von Elektrofahrzeugen zwischen 50 und einigen 100 km ist es notwendig, dass auch außerhalb des häuslichen Umfeldes ein Laden der Fahrzeuge möglich ist. Daher müssen in öffentlichen Bereichen Ladestationen zur Verfügung gestellt werden, um eine stete Verfügbarkeit von Energie für Elektrofahrzeuge durch ein Versorgungsnetz zu gewährleisten. Diese Verfügbarkeit ist ein entscheidendes Kriterium für die Akzeptanz von Elektrofahrzeugen.

US 4 422 269 A offenbart einen Säulensockel mit einem Fuß und einem aus dem Fuß herausrangenden Stumpf, wobei der Fuß und der Stumpf aus Beton gebildet sind.

Im öffentlichen Bereich müssen die Ladestationen jedoch nicht lediglich für die Energieversorgung sorgen, sondern müssen auch leicht eingebaut werden können. Darüber hinaus müssen die Ladesäulen, um einen guten optischen Eindruck zu erwecken, senkrecht stehen. Schließlich müssen die Ladesäulen auch größere Querkräfte aufnehmen können, ohne dass sich ihre Position und Ausrichtung verändert. Solche Kräfte können beispielsweise durch anfahrende PKW verursacht werden. In diesem Fall soll ein Umknicken verhindert werden. Auch sollen Personen die Ladesäulen nicht aus ihrer Position verrücken können. Schließlich ist ein fester Stand auch sicherheitsrelevant, da in der Ladesäule Stromleitung mit hohen Spannungen und Strömen geführt werden. Die elektrischen Anschlüsse müssen sicher vor Beschädigung an die Ladesäule herangeführt werden.

Aus den zuvor genannten Gründen lag dem Gegenstand die Aufgabe zugrunde, einen leicht installierbaren, eine hohe Stabilität gewährleistenden Ladesäulensockel für elektrische Ladesäulen zur Verfügung zu stellen, welcher einen elektrischen Anschluss vereinfacht.

Diese Aufgabe wird gegenständlich durch einen Ladesäulensockel nach Anspruch 1 gelöst.

Es hat sich gezeigt, dass ein Ladesäulensockel als Betonfertigteil hergestellt werden kann und unmittelbar vor Ort lediglich auf einer Sauberkeitsschicht aufgebracht werden kann. Für den elektrischen Anschluss ist es jedoch notwendig, dass das elektrische Energiekabel in das Innere der Ladesäule hineingeführt wird, ohne dass ein Abgriff von außen möglich ist. Auch muss eine Beschädigung des Energiekabels von außen möglichst vermieden werden. Dadurch, dass der Fuß eine radiale Aussparung aufweist, kann im Bereich des Sauberkeitsschicht das elektrische Energiekabel ohne Weiteres beim Installieren des Ladesäulensockels in die im Stumpf sich in axialer Richtung erstreckende Öffnung eingeführt werden. Durch die Öffnung, die sich in axialer Richtung erstreckt, kann das Energiekabel aus dem Stumpf, besonders bevorzugt entlang der Mittelachse des Stumpfes herausgeführt werden und anschließend mit den elektrischen Anschlüssen einer Ladesäule verbunden werden. Die radiale Aussparung erstreckt sich bevorzugt von der Mitte des Fußes bis zu seiner Außenkante. Die radiale Aussparung und die Öffnung überlappen einander teilweise.

Durch die vorgefertigten Aussparungen und Öffnungen im Fuß und im Stumpf wird die Vorinstallation eines Ladesäulensockels erheblich vereinfacht. Es ist lediglich notwendig, dass eine Tiefbaufirma das Fertigteil auf eine Sauberkeitsschicht aufbringt. Der elektrische Anschluss kann danach durch einen Elektriker ohne Weiteres durch die Aussparung in die Öffnung hineingeführt werden und auf der Oberseite des Stumpfes herausgeführt werden und mit den Anschlüssen der Ladesäule elektrisch verbunden werden.

Darüber hinaus bietet die Ausgestaltung mit einem Fuß und einem Stumpf den Vorteil, dass der Ladesäulensockel einen sicheren Stand hat. Der Fuß, als auch ein Großteil des Stumpfes kann unterhalb der Geländeoberkante fest eingebaut werden.

Ein besonders fester Stand und eine besonders hohe Aufnahme von Scherkräften ist dann möglich, wenn der Fuß eine größere Kantenlänge als der Stumpf aufweist. In diesem Fall erstreckt sich der Fuß innerhalb des Erdreiches über eine größere Fläche als der Stumpf. Auftretende Drehmomente, die durch Belastung der Ladesäule an der Oberfläche auftreten, können durch den Fuß aufgenommen werden. Das Gewicht des Ladesäulensockels darf nicht zu groß sein, da ansonsten ein solcher Sockel nicht mehr vernünftig bzw. nur mit einem großen Aufwand eingebaut werden kann. Andererseits muss jedoch das Gewicht so groß sein, dass der Ladesäulensockel nicht ohne Weiteres aus dem Erdreich gehoben werden kann. Aus diesem Grunde hat sich herausgestellt, dass ein Fuß mit einer Kantenlänge von zumindest 50 cm einen guten Kompromiss darstellt. Hierbei kann der Fuß beispielsweise quadratisch sein. Mit einem solchen Fuß lässt sich zum Einen eine gute Standfestigkeit realisieren und zum Anderen das Gewicht des Ladesäulensockels ausreichend gering halten.

Um ein Herausziehen des Ladesäulensockels aus dem Erdreich zu verhindern wird vorgeschlagen, dass der Stumpf sich in Richtung des Fußes vergrößert. Bevorzugt ist der Stumpf kegelstumpfförmig oder pyramidenförmig. Auch wird durch die sich nach oben hin verjüngende Form des Stumpfes dazu benutzt, den Ladesäulensockel möglichst senkrecht im Erdreich zu befestigen.

Wie bereits zuvor erläutert, ist zum Einen das Gewicht ein wichtiges Kriterium für einen Ladesäulensockel. Zum Anderen ist jedoch auch die Standfestigkeit ein wichtiges Kriterium. Einen guten Kompromiss zwischen Gewicht und Standfestigkeit bietet ein Stumpf, der eine Kantenlänge zwischen 20 und 40 cm aufweist. Bevorzugt ist hierbei der Stumpf rechteckig.

Darüber hinaus muss die Ladesäule eine ausreichende Tiefe im Erdreich aufweisen, um nicht aus dem Erdreich herausgezogen zu werden. Es hat sich gezeigt, dass eine Höhe des Ladesäulensockels von zumindest 40 cm vorteilhaft ist. In diesem Fall kann der Ladesäulensockel beispielsweise derart eingebaut sein, dass seine Oberkante 2 cm oberhalb der Geländeroberkante liegt. In diesem Fall muss die Sauberkeitsschicht 38 cm unterhalb der Geländeroberkante angeordnet werden.

Der Ladesäulensockel dient zur Aufnahme einer Ladesäule, welche beispielsweise 1 m bis 1,50 m groß ist. Eine solche Ladesäule kann beispielsweise aus einem Edelstahlblech geformt sein. Bei der Installation der Ladesäule muss diese auf den Ladesäulensockel aufgeschoben werden. Um ein Verkanten der Ladesäule an dem Ladesäulensockel zu verhindern wird vorgeschlagen, dass eine Oberkante des Stumpfes eine Fase aufweist. Dies führt dazu, dass die Ladesäule ohne Probleme auf den Ladesäulensockel aufgeschoben werden kann. Ist die Ladesäule gegenüber dem Ladesäulensockel verkantet, so sorgt die Fase dafür, dass die Ladesäule trotzdem über den Stumpf geschoben werden kann. Hierbei wird die Ladesäule über den oberhalb der Geländeroberkante liegenden Teil des Stumpfes geschoben.

Um Stauwasser im Bereich zwischen dem Stumpf und dem Fuß zu verhindern, wird vorgeschlagen, dass der Fuß sich in Richtung des Stumpfes verjüngt. Eine solche Ausgestaltung bietet den Vorteil, dass Wasser vom Stumpf und dem Fuß fortgeleitet wird.

Die Ladesäule muss fest mit dem Ladesäulensockel verankert werden. Aus diesem Grunde kann auf dem Ladesäulensockel ein Rammschutz installiert werden. Dieser Rammschutz wird bevorzugt mit dem Ladesäulensockel verschraubt. Daran anschließend kann die Ladesäule mit dem Rammschutz verschraubt werden. Hierdurch ist die Ladesäule mittels des Rammschutzes fest an dem Sockel befestigt. Insbesondere ist der Rammschutz integrierbar in die Ladesäule gestaltet. Somit wird der Rammschutz durch die hierüber gestülpte Ladesäule optisch verdeckt.

Eine Verschraubung des Rammschutzes an dem Sockel kann mit einem Bolzen geschehen, der mit dem Ladesäulensockel fest verankert ist. Ein solcher Bolzen wird gemäß eines vorteilhaften Ausführungsbeispiels dadurch zur Verfügung gestellt, dass ein im Wesentlichen L-förmiger Bolzen mit einem ersten Schenkel sich radial erstreckend im Fuß angeordnet ist und mit einem zweiten Schenkel sich radial erstreckend im Sockel angeordnet ist. Ein L-förmiger Bolzen bietet den Vorteil, dass dieser Zug-, als auch Scherkräfte aufnehmen kann. Durch die L-Form wird eine hohe Zugfestigkeit gewährleistet. Der Bolzen erstreckt sich vorteilhaft nach außen weisend innerhalb des Fußes. Innerhalb des Schenkels verläuft der Bolzen vorteilhafterweise parallel zu der Öffnung axial zur Ausbreitungsrichtung des Stumpfes.

Eine Verschraubung mit einem Rammschutz bzw. einer Ladesäule wird dadurch gewährleistet, dass der sich axial erstreckende Schenkel des Bolzens aus dem Stumpf herausragt. In diesem Fall wird auch bevorzugt, dass der herausragende Bereich des Bolzens ein Gewinde aufweist. Bevorzugt ist der Bolzen aus einem Edelmetall geformt.

Eine besonders hohe Zugfestigkeit und somit eine erhöhte Sicherheit wird dadurch gewährleistet, dass der Bolzen mit zumindest einem Bewährungseisen innerhalb des Sockels verschweißt ist. Ein Verschweißen des Bolzens geschieht vorzugsweise mit den Bewährungseisen innerhalb des Fußes. Der Ladesäulensockel wird bevorzugt als Betonfertigteil hergestellt. In diesem Fall wird vor dem Gießen des Betons ein Bewährungsgitter geflochten, welches die Stabilität des Betons erhöhen soll. Der Bolzen kann daraufhin mit dem Bewährungseisen des Bewährungsgitters verschweißt werden und anschließend kann der Ladesäulensockel aus Beton gegossen werden.

Gemäß einem vorteilhaften Ausführungsbeispiel wird vorgeschlagen, dass der Fuß und der Stumpf einstückig sind. Hierdurch werden Nähte zwischen Fuß und Stumpf vermieden. Außerdem ist die Herstellung einfacher. Der Ladesäulensockel muss allen Witterungsbedingungen standhalten und große Kräfte aufnehmen können. Aus diesem Grunde wird vorgeschlagen, dass der Beton eine Güteklasse C35/45 aufweist.

Da die Ladesäule im aufgestellten Zustand möglichst lotrecht stehen soll, ist es wichtig, den Sockel möglichst waagerecht in einem Fundament oder auf einer Sauberkeitsschicht zu versetzen. Dies ist aufgrund des hohen Gewichts des Ladesäulensockels nicht unproblematisch. Daher lag dem Gegenstand auch die Aufgabe zugrunde, einen möglichst einfachen und dennoch waagerechten Einbau eines Ladesäulensockels zu ermöglichen.

Diese Aufgabe wird dadurch gelöst, dass der Ladesäulensockel einen Fuß und einen aus dem Fuß herausragenden Stumpf derart aufweist, dass der Stumpf eine sich in axialer Richtung erstreckende Öffnung zur Aufnahme eines Bolzens aufweist und dass der Stumpf zumindest zwei aus der oberen Oberfläche hervorstehende Bolzen aufweist.

Die aus der oberen Oberfläche des Stumpfes hervorstehenden Bolzen dienen zur Aufnahme einer Hebevorrichtung, welche ein maschinelles Anheben des Sockels ermöglicht. Die Bolzen können als Gewindestifte gebildet sein. Die Bolzen können zum Einen zur Aufnahme der Hebevorrichtung und zum Anderen zur Befestigung der Ladesäule gebildet sein. Die Bolzen können äquidistant um einem Mittelpunkt und/oder Schwerpunkt des Sockels herum angeordnet sein. Vorzugsweise können vier Bolzen um die Öffnung herum angeordnet sein.

Die Öffnung zur Aufnahme eines Bolzens kann dazu dienen, dass ein an einer Hebevorrichtung angeordneter Bolzen in der Öffnung während der Montage des Sockels aufgenommen wird, so dass die Hebevorrichtung unmittelbar an der oberen Oberfläche des Sockels anliegen kann. Der Bolzen kann beispielsweise einen Haken oder eine Öse an der Hebevorrichtung befestigen.

Die Öffnung ist bevorzugt am Schwerpunkt des Sockels, bzw. an der Projektion des Schwerpunktes auf die obere Oberfläche des Sockels, angeordnet.

Nachfolgend wird der Gegenstand anhand einer Ausführungsbeispiele zeigenden Zeichnung näher erläutert. In der Zeichnung zeigen:
- Fig. 1: eine Seitenansicht eines Ladesäulensockels;
- Fig. 2: eine Unteransicht eines Ladesäulensockels;
- Fig. 3: eine schematische Ansicht eines installierten Ladesäulensockels;
- Fig. 4a: eine Draufsicht auf eine Hebevorrichtung;
- Fig. 4b: eine Seitenansicht einer Hebevorrichtung;
- Fig. 5: eine Seitenansicht eines Ladesäulensockels mit einer Hebevorrichtung.

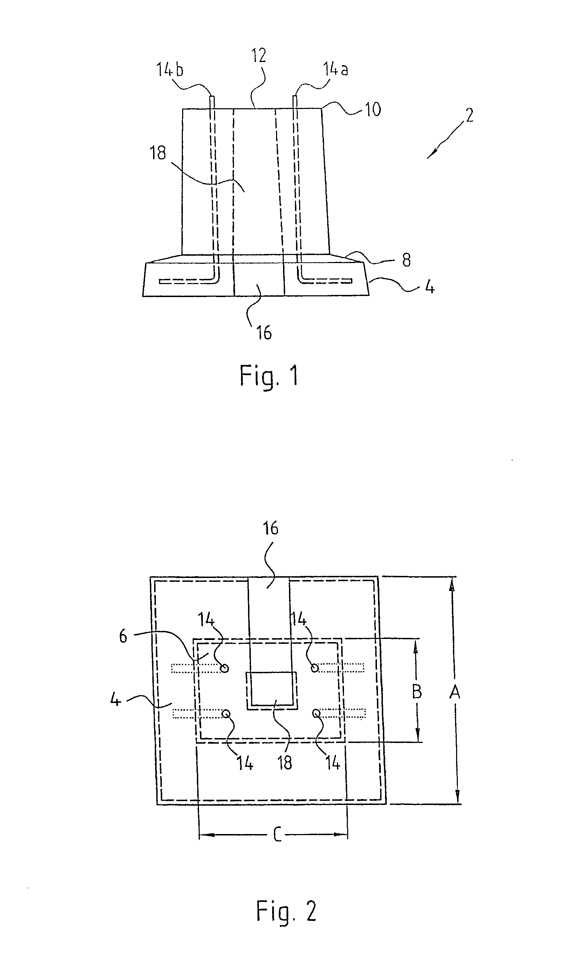

Fig. 1 zeigt einen Ladesäulensockel 2 mit einem Fuß 4 und einem Stumpf 6. Zu erkennen ist, dass der Fuß 4 im unteren Bereich des Ladesäulensockels 2 angeordnet ist. In Richtung des Stumpfes 6 verjüngt sich der Fuß 4 in einem Übergangsbereich 8. Anschließend an dem Übergangsbereich 8 erstreckt sich der Stumpf 6 nach oben. Zu erkennen ist, dass der Fuß 4 eine größere Kantenlänge aufweist, als der Stumpf 6. Der Stumpf 6 erstreckt sich von dem Übergangsbereich 8 in Richtung seiner Oberkante 10. Hierbei verjüngt sich der Stumpf 6 in Richtung der Oberkante 10. Die Oberkante 10 ist bevorzugt angefast.

Ferner ist zu erkennen, dass aus der Oberfläche 12 des Stumpfes 6 zwei Bolzen 14a, 14b herausragen. Zu erkennen ist, dass die Bolzen 14a, 14b L-förmig sind. Bevorzugt werden hier Bolzen 14, bevorzugt äquidistant zum Mittelpunkt des Stumpfes 6 und/oder zueinander in dem Sockel 2 angeordnet. Ein erster Schenkel eines Bolzens 14 erstreckt sich innerhalb des Fußes 4 in radialer Richtung. Ein zweiter Schenkel des Bolzens 14 erstreckt sich in axialer Richtung innerhalb des Stumpfes und ragt aus der Oberfläche 12 des Stumpfes 6 heraus.

Auch zu erkennen ist, dass in dem Fuß 4 eine Aussparung 16 vorgesehen ist. Die Aussparung 16 erstreckt sich in radialer Richtung. Darüber hinaus ist zu erkennen, dass in dem Stumpf 6 eine Bohrung 18 vorgesehen ist, welche sich in axialer Richtung in Richtung der Oberfläche 12 des Stumpfes 6 erstreckt.

Fig. 2 zeigt eine Unteransicht eines Ladesäulensockels 2. Zu erkennen ist, dass sich die Aussparung 16 von der Mitte des Fußes 4 nach außen hin erstreckt. Oberhalb der Aussparung 16 befindet sich im Stumpf 6 die Öffnung 18. Durch die Aussparung 16 und die Öffnung 18 kann ein Energiekabel aus dem Erdreich zur Oberfläche 12 des Ladesäulensockels 2 geführt werden. Der Fuß 4 hat bevorzugt eine Kantenlänge A von 50 bis 55 cm. Außerdem ist der Fuß 4 bevorzugt quadratisch. Der Stumpf 6 hat bevorzugt eine Kantenlänge B von 23 cm und eine Kantenlänge C von 35 cm.

Ferner sind in Fig. 2 die sich radial erstreckenden Schenkel der Bolzen 14 innerhalb des Fußes 4 zu erkennen. Zu erkennen ist, dass insgesamt vier Bolzen 14 in dem Fuß 4 und dem Sockel 6 angeordnet sind.

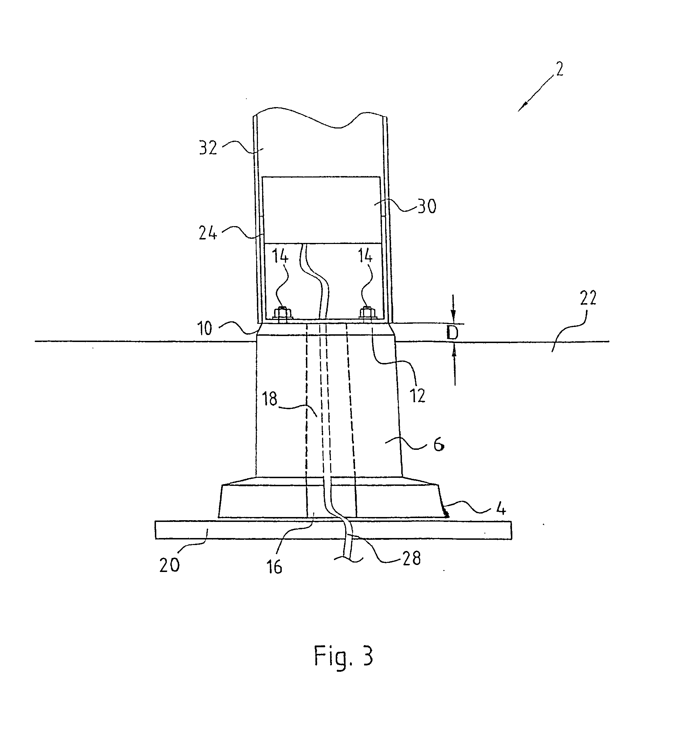

Fig. 3 zeigt eine schematische Ansicht eines installierten Ladesäulensockels 2. Zu erkennen ist, dass der Fuß 4 auf einer Sauberkeitsschicht 20 aufgestellt ist. Der Stumpf 6 erstreckt sich durch das Erdreich 22 bis zu der Oberkante des Erdreichs 22 und ragt aus dieser um das Maß D von zumindest 2 cm heraus. Auf der Oberfläche 12 des Stumpfes 6 ist ein Rammschutz 24 installiert. Der Rammschutz 24 ist zumindest U-förmig und mit seinem Bodenteil mit dem Stumpf 6 verschraubt. Hierzu werden Muttern 26 auf die Bolzen 14 aufgeschraubt.

Ferner zu erkennen ist, dass eine elektrische Leitung 28 durch die Aussparung 16 in das Innere des Fußes 4 geführt wird. Die elektrische Leitung 28 erstreckt sich durch die Öffnung 18 durch den Stumpf 6 hindurch. An der Oberfläche 12 des Stumpfes 6 tritt die Leitung 28 aus dem Stumpf 6 heraus und kann beispielsweise mit einem Hausanschlusskasten 30 elektrisch verbunden werden.

Der Ladesäulensockel 2 kann von einer Tiefbaufirma vorinstalliert werden. Die Tiefbaufirma muss lediglich die elektrische Leitung 28, nachdem der Sockel auf die Sauberkeitsschicht 20 gesetzt wurde, in die Aussparung 16 und die Öffnung 18 einführen und aus dem Stumpf 6 herausführen. Der so vorinstallierte Ladesäulensockel kann in dem Erdreich 22 eingebaut werden. Anschließend kann zu einem späteren Zeitpunkt eine Installationsfirma den Rammschutz 24 auf den Stumpf 6 aufschrauben und einen elektrischen Anschluss mittels eines beispielsweise mit dem Rammschutz 24 verschraubten Hausanschlusskastens 30 ermöglichen. Im Anschluss daran kann eine Ladesäule 32 über den Rammschutz 24 geschoben werden. Zu erkennen ist, dass die Oberkante des Stumpfes 6 angefast ist. Dies führt dazu, dass die Ladesäule 32 ohne zu verkanten über den Stumpf 6 geschoben werden kann.

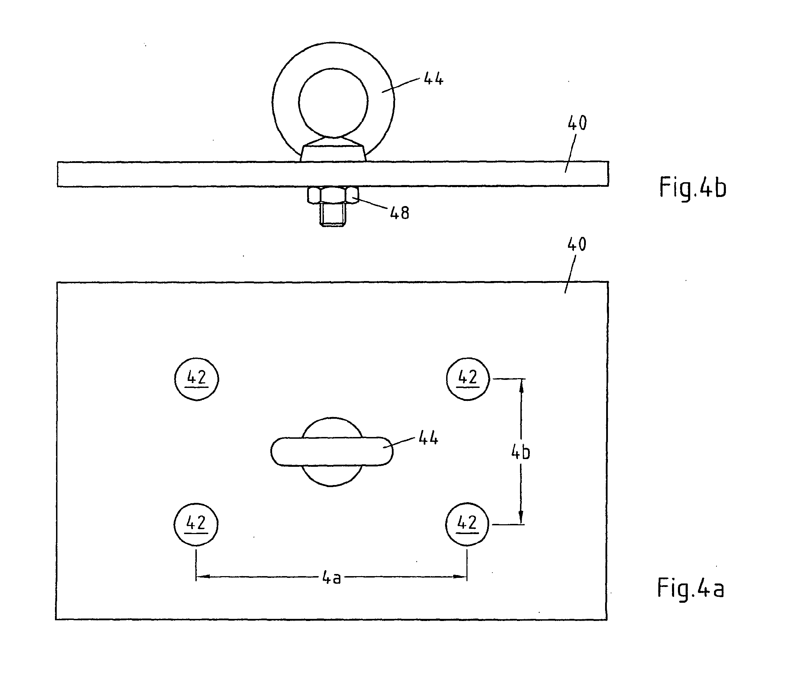

Fig. 4a zeigt eine Draufsicht auf eine Hebevorrichtung 40. An der Hebevorrichtung 40 ist eine Öse 44 befestigt. Äquidistant zu der Öse 44 sind Bohrungen 42 angeordnet. Die Bohrungen 42 haben einen Abstand 46a, 46b, der dem Abstand der Bolzen 14 des Sockels 2 entspricht.

Fig. 4b zeigt eine Seitenansicht der Hebevorrichtung 40. Zu erkennen ist, dass die Öse 44 mit einem Bolzen durch eine zentrische Öffnung in dem Flachteil der Hebevorrichtung 40 gesteckt ist. Der Bolzen ist mit einer Mutter 48 verschraubt. Somit kann die Öse 44 eine Normalkraft aufnehmen. Die Öse 44 ist bevorzugt in der Projektion des Schwerpunktes angeordnet.

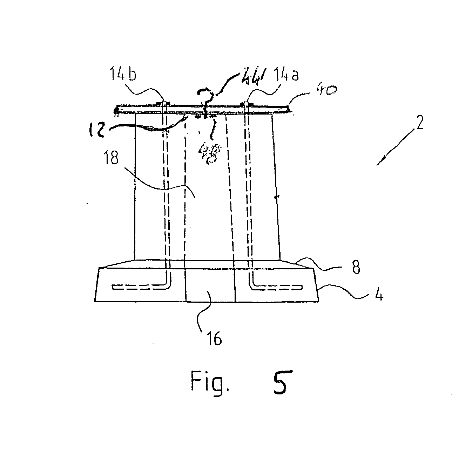

Fig. 5 zeigt einen Sockel 2 mit einer Hebevorrichtung 40. Zu erkennen ist, dass die Hebevorrichtung 40 mit den Bohrungen 42 in die Bolzen 14 eingesteckt ist. Außerdem ist zu erkennen, dass an der Hebevorrichtung 40 ein Haken 44' mittels eines Bolzens und einer Mutter 48 befestigt ist. Zu erkennen ist, dass der Bolzen und die Mutter 48 in der Aussparung 16 angeordnet sind. Das führt dazu, dass die Hebevorrichtung 40 unmittelbar an der Oberfläche 12 des Sockels 2 anliegt.

Die Bolzen 14 werden mit Muttern an der Hebevorrichtung 40 befestigt. Somit kann über den Haken 44' eine Normalkraft auf den Sockel 2 ausgeübt und der Sockel angehoben werden. Dadurch, dass sowohl die Aussparung 16 als auch der Haken 44' in der Projektion des Schwerpunktes des Sockels 2 angeordnet sind, wird der Sockel ausbalanciert angehoben, derart, dass der Boden des Sockels waagerecht ist und waagerecht auf ein Fundament oder eine Sauberkeitsschicht 20 aufgesetzt werden kann. Danach wir die Hebevorrichtung 40 von dem Sockel 2 gelöst und der Aufbau gemäß Fig. 3 kann erfolgen. Durch den waagerechten Einbau des Sockels ist sichergestellt, dass die Oberfläche 12 waagerecht ist. Das stellt sicher, das der Rammschutz 24 und die Ladesäule 32 im Wesentlichen lotrecht stehen.

Mittels des gegenständlichen Ladesäulensockels ist es möglich, in besonders einfacher Weise eine Installation vorzunehmen, wobei der Ladesäulensockel eine hohe Sicherheit bei einer hohen Standfestigkeit und einer leichten Installierbarkeit gewährleistet.

## Patentansprüche

1. Ladesäulensockel für eine elektrische Ladesäule mit
- einem Fuß (4),
- einem aus dem Fuß herausragenden Stumpf (6),
- wobei der Fuß (4) und der Stumpf (6) aus Beton gebildet sind,
- **dadurch gekennzeichnet, dass**
- der Fuß (4) eine radiale Aussparung (16) aufweist und der Stumpf (6) eine sich in axialer Richtung erstreckende, über der Aussparung (16) angeordnete Öffnung zur Aufnahme eines Energiekabels (28) aufweist.

2. Ladesäulensockel nach Anspruch 1, **dadurch gekennzeichnet, dass** der Fuß (4) eine größere Kantenlänge (A) als der Stumpf (6) aufweist.

3. Ladesäulensockel nach Anspruch 1, **dadurch gekennzeichnet, dass** der Stumpf (6) sich in Richtung des Fußes (4) vergrößert.

4. Ladesäulensockel nach Anspruch 1, **dadurch gekennzeichnet, dass** der Ladesäulensockel (2) eine Höhe von zumindest 40 cm aufweist.

5. Ladesäulensockel nach Anspruch 1, **dadurch gekennzeichnet, dass** eine Oberkante (10) des Stumpfes (6) eine Fase aufweist.

6. Ladesäulensockel nach Anspruch 1, **dadurch gekennzeichnet, dass** der Fuß (4) sich in Richtung des Stumpfes (6) verjüngt.

7. Ladesäulensockel nach Anspruch 1, **dadurch gekennzeichnet, dass** ein im Wesentlichen L-förmiger Bolzen (14) mit einem ersten Schenkel sich radial erstreckend im Fuß (4) angeordnet ist und mit einem zweiten Schenkel sich axial erstreckend im Sockel (6) angeordnet ist.

8. Ladesäulensockel nach Anspruch 7, **dadurch gekennzeichnet, dass** der sich axial erstreckende Schenkel des Bolzens (14) aus dem Stumpf (6) ragt.

9. Ladesäulensockel nach Anspruch 7, **dadurch gekennzeichnet, dass** der Bolzen (14) im aus dem Stumpf herausragenden Bereich ein Gewinde aufweist.

10. Ladesäulensockel nach Anspruch 7, **dadurch gekennzeichnet, dass** der Bolzen (14) mit zumindest einem Bewährungseisen innerhalb des Sockels verschweißt ist.

11. Ladesäulensockel nach Anspruch 1, **dadurch gekennzeichnet, dass** der Fuß (4) und der Stumpf (6) einstückig sind.

12. Ladesäulensockel nach Anspruch 1, **dadurch gekennzeichnet, dass** der Stumpf (6) zumindest zwei aus der oberen Oberfläche hervorstehende Bolzen (14) aufweist.

## Claims

1. Charging pillar base for an electric charging pillar with
- a foot (4),
- a stump (6) protruding from the foot,
- wherein the foot (4) and the stump (6) are formed from concrete,
- **characterised in that**
- the foot (4) has a radial recess (16) and the stump (6) has an opening extending in the axial direction and arranged above the recess (16) to receive an energy cable (28).

2. Charging pillar base according to claim 1, **characterised in that** the foot (4) has a greater edge length (A) than the stump (6).

3. Charging pillar base according to claim 1, **characterised in that** the stump (6) expands in the direction of the foot (4).

4. Charging pillar base according to claim 1, **characterised in that** the charging pillar base (2) has a height of at least 40 cm.

5. Charging pillar base according to claim 1, **characterised in that** the upper edge (10) of the stump (6) has a chamfer.

6. Charging pillar base according to claim 1, **characterised in that** the foot (4) tapers in the direction of the stump (6).

7. Charging pillar base according to claim 1, **characterised in that** a substantially L-shaped bolt (14) is arranged with a first leg extending radially in the foot (4) and with a second leg extending axially in the base (6).

8. Charging pillar base according to claim 1, **characterised in that** the axially extending leg of the bolt (14) protrudes from the stump (6).

9. Charging pillar base according to claim 1, **characterised in that** the bolt (14) has a thread in the area protruding from the stump.

10. Charging pillar base according to claim 1, **characterised in that** the bolt (14) is welded to at least one retaining bracket inside the base.

11. Charging pillar base according to claim 1, **characterised in that** the foot (4) and the stump (6) are made of one piece.

12. Charging pillar base according to claim 1, **characterised in that** the stump (6) has at least two bolts (14) protruding from its upper surface.

## Revendications

1. Socle de colonne de rechargement pour une colonne de rechargement électrique, avec
- un pied (4),
- un tronc (6) qui fait saillie hors du pied,
- sachant que le pied (4) et le tronc (6) sont en béton,
**caractérisé en ce que**
- le pied (4) est doté d'un évidement radial (16) et le tronc (6) est doté d'une ouverture qui, destinée à recevoir d'un câble d'énergie (28), s'étend dans la direction axiale et est disposée au-dessus de l'évidement (16).

2. Socle de colonne de rechargement selon la revendication 1,
**caractérisé en ce que** le pied (4) présente une longueur de bord (A) supérieure à celle du tronc (6).

3. Socle de colonne de rechargement selon la revendication 1,
**caractérisé en ce que** le tronc (6) s'élargit en direction du pied (4).

4. Socle de colonne de rechargement selon la revendication 1,
**caractérisé en ce que** le socle de colonne de rechargement (2) a une hauteur d'au moins 40 cm.

5. Socle de colonne de rechargement selon la revendication 1,
**caractérisé en ce que** le bord supérieur (10) du tronc (6) est doté d'un chanfrein.

6. Socle de colonne de rechargement selon la revendication 1,
**caractérisé en ce que** le pied (4) s'amincit en direction du tronc (6).

7. Socle de colonne de rechargement selon la revendication 1,
**caractérisé en ce qu'** est agencé un boulon (14) sensiblement en forme de L, qui, avec une branche, s'étend radialement dans le pied (4) et, avec l'autre branche, s'étend axialement dans le socle (6).

8. Socle de colonne de rechargement selon la revendication 7,
**caractérisé en ce que** la branche du boulon (14), qui s'étend axialement, fait saillie hors du tronc (6).

9. Socle de colonne de rechargement selon la revendication 7,
**caractérisé en ce que** le boulon (14) est doté d'un filet dans la région en saillie hors du tronc.

10. Socle de colonne de rechargement selon la revendication 7,
**caractérisé en ce que** le boulon (14) est soudé avec au moins un fer d'armature à l'intérieur du socle.

11. Socle de colonne de rechargement selon la revendication 1,
**caractérisé en ce que** le pied (4) et le tronc (6) sont formés d'une seule pièce.

12. Socle de colonne de rechargement selon la revendication 1,
**caractérisé en ce que** le tronc (6) est doté d'au moins deux boulons (14) qui font saillie hors de la face supérieure.
